# DEMANDE DE BREVET EUROPEEN

(11) **EP 2 669 686 A1**
(43) Date de publication de la demande: **04.12.2013**
(21) Numéro de dépôt: 12170292.2
(22) Date de dépôt: 31.05.2012
(51) Int. Cl.: G01P 1/08, G01P 3/64, G01D 7/08

(54) **Procédé d'affichage analogique pour tachymètre**

(71) Demandeur: Certina SA, 2400 Le Locle (CH)
(72) Inventeur: Bringolf, Martial, 2000 Neuchâtel (CH); Corrêa, David, 2503 Bienne (CH)
(74) Mandataire: Gilligmann, Benoît Philippe

(57) **Abrégé**

Tachymètre électronique comprenant un premier module d'affichage (10) utilisant des moyens d'affichages analogiques, une interface de commande (30) et un circuit électronique (40) pour l'activation desdits moyens d'affichage analogiques, caractérisé en ce que les moyens d'affichage analogiques comprennent un premier organe d'affichage analogique (14) agencé pour afficher une première valeur (V1) de vitesse instantanée (Vᵢₙₛₜ) et un deuxième organe d'affichage analogique (15) agencé pour afficher une deuxième valeur (V2).

## Description

La présente invention concerne un procédé de commande et d'affichage pour tachymètre électronique, et plus précisément pour un tachymètre intégré à une pièce d'horlogerie.

Les tachymètres sont des instruments de mesure permettant de déterminer des vitesses de déplacement d'objets en mouvement. Dans le domaine de l'horlogerie, des tachymètres sont habituellement agencés sur des cadrans ou des lunettes de montre, où des graduations permettent de déterminer une vitesse moyenne pour parcourir une distance prédéterminée, comme par exemple un kilomètre. Une trotteuse, comme par exemple l'aiguille des secondes d'un chronomètre, est actionnée par un poussoir lors du passage au niveau d'un marqueur de distance, typiquement une borne routière, puis arrêtée lors du passage au niveau du marqueur suivant. La vitesse moyenne entre les deux bornes est alors indiquée sur l'échelle graduée en regard de la trotteuse.

L'inconvénient de ce genre de tachymètres est qu'il ne permet pas d'ajuster la longueur de référence pour la mesure, qui est fixe et égale à un kilomètre. Ainsi d'une part le caractère hyperbolique de l'échelle en rend la lecture difficile pour des vitesses élevées, et d'autre part il n'est pas possible d'afficher des vitesses inférieures à 60 kilomètres par heure. Cette limitation d'affichage pour des vitesses basses est du reste préjudiciable notamment pour des mesures de vitesse pour des coureurs à pied ou des cyclistes, pour lesquels il serait nécessaire d'avoir des longueurs de référence plus courtes.

Pour remédier à ces inconvénients en termes de réglage, on connaît par ailleurs des appareils de mesure de vitesse dans lesquels il est possible à l'utilisateur de programmer électroniquement une distance de référence quelconque, comme par exemple celui décrit dans le document US4592001. Cet appareil affiche toutefois la vitesse mesurée sous forme numérique sur un écran de type LCD, ce qui présente l'inconvénient de ne représenter que des valeurs discrètes par l'intermédiaire de chiffres sans pouvoir positionner intuitivement le résultat à afficher par rapport à l'ensemble d'une plage de vitesse possible, et avoir ainsi immédiatement un aperçu global de la nature de la vitesse (c'est-à-dire faible, moyenne ou élevée).

Par ailleurs, autant sur les tachymètres analogiques classiques que sur les tachymètres numériques la nature de l'information affichée se limite à la vitesse instantanée, ce qui en rend l'usage peu ludique.

Il existe donc un besoin pour des tachymètres exempts de ces limitations connues.

En particulier, un but de la présente invention est de fournir un tachymètre plus convivial, qui permette d'afficher des valeurs de vitesse sous forme analogique sur une plage de valeurs plus élevée.

Un autre but de la présente invention est de pouvoir afficher intuitivement d'autres types d'informations relatives à une série de mesures de vitesse.

Ces buts sont atteints notamment grâce à une méthode de commande et d'affichage pour tachymètre qui comprend les caractéristiques de la revendication principale 1 de procédé, ainsi qu'un tachymètre électronique qui comprend les caractéristiques de la revendication principale 12 de dispositif. Des modes de réalisation avantageux sont définis dans les revendications dépendantes.

Un avantage de la solution proposée est de rendre plus simple et plus intuitive la lecture et la comparaison de tout type de valeurs de vitesse, y compris des valeurs de vitesse très faibles, c'est à dire proches de 0, et des valeurs de vitesse très élevées, par exemple supérieures à 200 kilomètres par heure. En effet la définition préalable d'une distance de référence pourra être choisie en adéquation avec les valeurs de mesures à effectuer à l'aide du tachymètre, puis l'utilisation d'organes d'affichage analogiques permettra à l'utilisateur de percevoir l'amplitude de leurs mouvements lors de l'affichage, ainsi que de visualiser leur positionnement relatif par rapport à l'ensemble des valeurs possibles, améliorant ainsi la qualité globale de l'affichage. Selon un mode de réalisation préférentiel, ces organes d'affichage pourront prendre la forme d'aiguilles en regard d'une échelle, de préférence linéaire, c'est-à-dire avec des écarts constants par plage de vitesse prédéfinie, pour simuler un environnement correspondant à un compteur de voiture familier à l'utilisateur, et améliorer encore la convivialité de l'affichage.

Un autre avantage de la solution proposée est de procurer à l'utilisateur du tachymètre un aperçu synoptique de plusieurs valeurs déduites des vitesses calculées, et lui permettre ainsi de pouvoir par exemple visualiser des écarts relatifs de vitesse sans avoir recours à une quelconque opération de calcul mental.

Des exemples de mise en oeuvre de l'invention sont indiqués dans la description et illustrés par les figures annexées dans lesquelles:
- la figure 1 illustre une montre pourvue d'un dispositif d'affichage pour tachymètre selon un mode de réalisation préférentiel de l'invention;
- la figure 2 illustre un schéma fonctionnel d'un tachymètre pour la mise en oeuvre du procédé selon un mode de réalisation préférentiel de l'invention;
- la figure 3 illustre un schéma des différentes étapes du procédé selon un mode de réalisation préférentiel de l'invention, ainsi que les différents paramètres de calculs, leurs zones de mémoire associées et les différents modules d'affichage utilisés pour chacune de ces étapes.

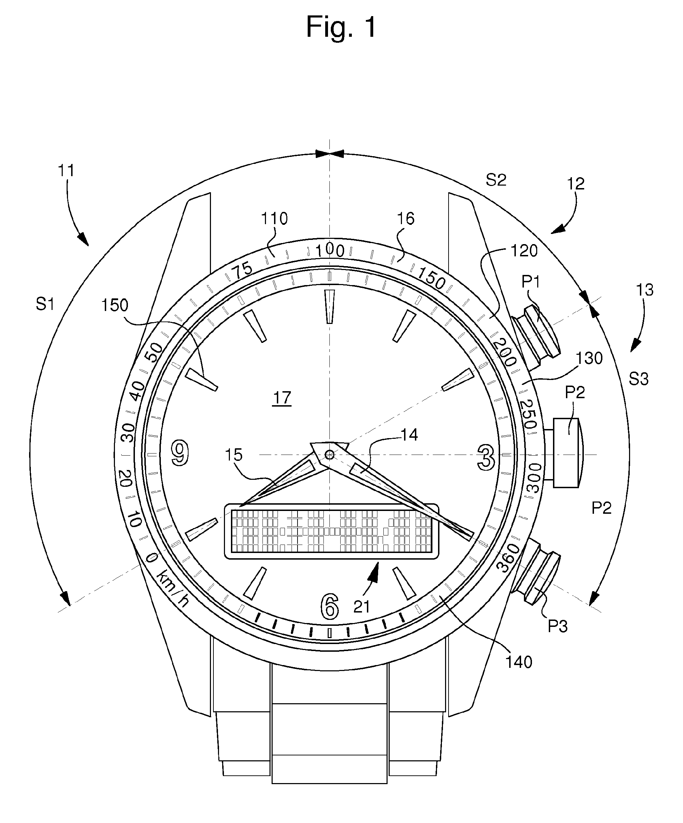

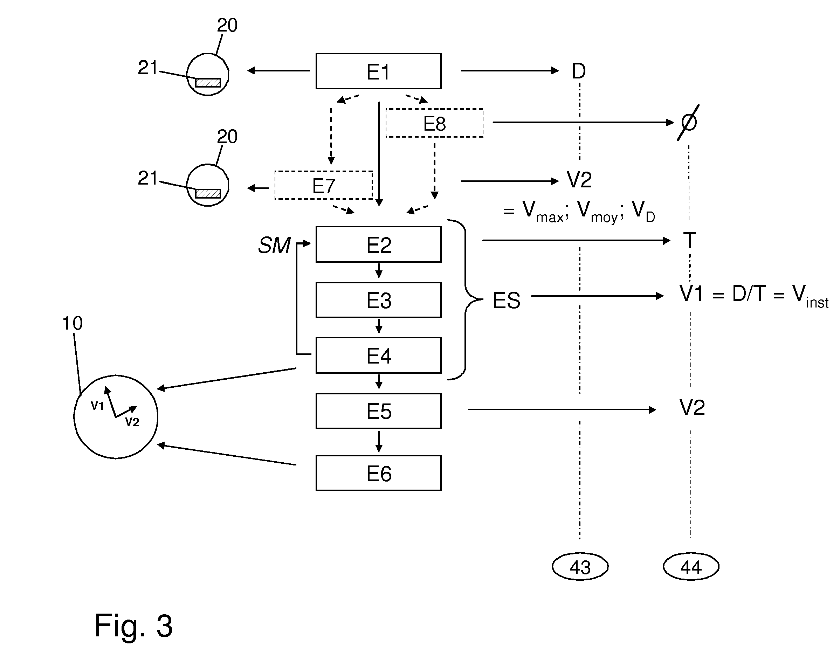

La figure 1 représente une montre bracelet pourvue d'un tachymètre électronique selon un mode de réalisation préférentiel de l'invention. On peut y distinguer une aiguille des heures 15 et d'une aiguille des minutes 14, qui seront utilisées pour afficher respectivement une valeur de vitesse instantanée Vᵢₙₛₜ et de préférence une vitesse maximale obtenue sur une série de mesure dans le mode tachymétrique. La montre bracelet comprend un cadran 17 surmonté d'une lunette 1 ainsi que trois poussoirs P1, P2 et P3 saillants hors de la carrure afin de faciliter leur manipulation pour effectuer des mesures ainsi que des opérations de réglage, notamment d'une longueur de référence pour les mesures, comme expliqué ci-après à l'aide de la figure 3. Sur la lunette 16 de forme circulaire sont disposés 3 segments d'affichage 11,12,13 comprenant chacun une respectivement une première série 110 de repères, une deuxième série 120 de repères, et une troisième série 120 de repères définissant chacun des échelles de valeurs linéaire, c'est-à-dire avec un espacement constant entre chacune des graduations ou des valeurs numériques indiquées, correspondant à écart de valeurs régulier. Une quatrième série 140 de repères, située en périphérie du cadran, permet de faciliter la lecture de l'heure, dans le mode d'affichage de l'heure courante, grâce une disposition en regard de l'extrémité de l'aiguille des minutes 14. Cette quatrième série 140 de repères comprend classiquement 60 graduations, correspondant chacune à une minute. La montre comprend par ailleurs une autre série 150 de 12 repères alphanumériques, alternant des graduations et des valeurs numériques pour faciliter la lecture de l'heure avec une disposition également en périphérie du cadran en regard de l'extrémité de l'aiguille des heures 15.

Les premiers, deuxième et troisième segments d'affichage 11,12,13 juxtaposés sur la lunette 16 sont utilisés conjointement comme module d'affichage analogique pour le tachymètre avec les organes d'affichage analogiques que forment les aiguilles (c'est-à-dire l'aiguille des heures 15 et des minutes 14). Le tachymètre selon l'invention comprend de préférence un deuxième module d'affichage numérique utilisant par exemple un écran LCD 21 comme celui agencé sur la partie inférieure du cadran 17 de la figure 1, et qui sert notamment à afficher la distance de référence D lors de l'opération de réglage E1 décrite à la figure 3, ou encore afficher un temps de mesure simultanément à l'affichage d'une vitesse instantanée Vᵢₙₛₜ. On pourra constater sur cette figure que les modules d'affichage analogique et numérique sont totalement disjoints et peuvent par conséquent être utilisés de manière simultanée et complémentaire. En effet, le positionnement des aiguilles au repos dans le mode d'affichage du tachymètre montre l'aiguille des heures 15 à 8 heures sur le cadran 17, ce qui correspond à une vitesse de 0 km/h sur l'échelle du tachymètre, et l'aiguille des minutes 14 à 4 heures sur le cadran 17, ce qui correspond à la vitesse maximale de 360 km/h selon le dispositif d'affichage illustré. Chacune des aiguilles peut se déplacer sur trois secteurs angulaires S1, S2,S3 contigus correspondant chacun respectivement au premier segment d'affichage 11, deuxième segment d'affichage 12 et troisième segment d'affichage 13, et qui s'étendent sur une première plage angulaire de 120 degrés, de 8 heures à midi sur le cadran 17, et deux plages angulaires de 60 degrés, respectivement de midi à deux heures et de deux à quatre heures sur le cadran 17. Elles ne se déplacent toutefois jamais dans le secteur angulaire de 120 degrés de la partie inférieure du cadran 17, entre 4 et 8 heures, c'est-à-dire l'espace situé sous les deux aiguilles sur la figure 1, dans lequel est disposé l'écran LCD 21.

Bien que d'autres dispositions soient possibles pour des modules d'affichage analogiques et numériques sans risque de chevauchement ou de superposition de valeurs, la disposition particulière du dispositif d'affichage pour tachymètre de la figure 1 présente l'avantage d'émuler un environnement familier pour l'utilisateur, à savoir un compteur de voiture, qui utilise également souvent un affichage analogique à aiguille sur un secteur angulaire similaire d'environ 240 degrés pour la lecture de la vitesse instantanée, ainsi qu'un affichage dual avec module numérique pour l'affichage de données complémentaires, de type tableau de bord dans la partie inférieure du cadran. Cette émulation d'un environnement familier pour la lecture d'une vitesse rend cette lecture encore plus intuitive pour l'utilisateur lorsqu'il consulte le tachymètre, par exemple directement sur sa montre-bracelet.

Cette similitude avec un compteur de voiture est accentuée par le fait que chacun des segments d'affichage 11,12,13 utilise des échelles de lecture linéaires sur chacun des secteurs angulaires S1,S2 et S3 correspondants. Bien que les échelles de lecture choisies soient distinctes pour des plages de valeurs de vitesse prédéfinies, ici de 0 à 100 km/h pour le premier segment 11, 100 à 200 pour le 2^{e} segment 12, et enfin 200 à 360 pour le 3^{e} segment, les segments d'affichage sont contigus, c'est-à-dire juxtaposés les uns aux autres dans le sens de la lecture, ici le sens horaire, de telle sorte qu'il n'y ait aucune interruption sur l'intégralité du compteur et que le confort de lecture soit optimal pour l'utilisateur, pour lequel un changement de segment n'est pas perceptible lors de l'affichage.

Selon le mode de réalisation préférentiel du dispositif d'affichage pour tachymètre selon l'invention, les premiers et deuxièmes segments d'affichage 11 et 12 utilisent des premières et deuxièmes séries de repères 110 et 120 alternant des valeurs numériques et de graduations qui se superposent radialement à celles de la quatrième série 140 de repères, c'est-à-dire les graduations des minutes de l'heure courante, afin de rendre la lecture des valeurs de vitesse encore plus aisée. L'écart angulaire de 6 degrés entre chacun des repères d'affichage est identique à celui des minutes sur le cadran et il est ainsi très facile de déduire la précision de chacun de ces secteurs angulaires: un peu moins d'un kilomètre heure par degré pour le premier segment 11 (c'est-à-dire 5 km/h pour chacune minute du cadran 17, soit 6 degrés), et le double pour le deuxième secteur 12 pour lequel 10 km/h correspondent à chacune minute du cadran 17. Grâce à une telle disposition des graduations et du choix des différentes échelles sur chaque segment il est non seulement possible d'avoir une lecture aisée des valeurs de vitesse sur l'intégralité de la plage s'étendant de 0 à 200 km/h, avec d'une part la possibilité d'afficher des vitesses inférieures à 60km/h et d'autre part d'afficher ces valeurs de vitesse avec une précision d'affichage significativement meilleure par rapport à un tachymètre classique sans remettre en cause la précision pour des vitesses plus élevées.

Pour des valeurs de vitesse encore supérieures, l'échelle du troisième segment 13 a été choisie pour représenter une plage de vitesse s'étalant sur 160km/h, entre 200km/h et 360km/h sur un secteur angulaire de 60 degrés, soit des graduations ou des repères représentant 10km/h d'écart tous les 3.75 degrés, soit environ tous les 2/3 de minute sur le cadran 17. La série des troisièmes repères 130 présente ainsi une sensibilité de près de 3 km/h par degré (plus exactement égale à 160/60), et le rapport avec la sensibilité de la série des premiers repères est légèrement supérieur à 3 (3.2 exactement). Ce rapport maximal entre les sensibilités extrêmes des différentes échelles linéaires choisies dans le cadre de l'invention est tout à faire acceptable comparé aux valeurs hyperboliques usuelles sur des mêmes plages de valeurs de vitesse, pour lesquelles un tel rapport est largement supérieur à 10 pour des plages de vitesses comparables. La précision de lecture est donc accrue à la fois pour des vitesses basses et élevées, sur plage très grande allant jusqu'à des vitesses qui peuvent être atteintes par des voitures du type formule 1.

L'homme du métier comprendra que la sensibilité et le nombre des segments d'affichage ont été adaptés pour des vitesses bornées par celles atteintes par les voitures les plus rapides évoluant sur circuit aujourd'hui, mais que des sensibilités et un nombre de secteurs différents pourraient être envisagés en fonction du type de voiture utilisée et des vitesses normalement atteintes par cette voiture.

Selon le mode de réalisation préférentiel illustré par la figure 1, le dispositif d'affichage du tachymètre est intégré à une montre-bracelet, de telle sorte que le premier organe d'affichage 14 correspond à l'aiguille des minutes et ledit deuxième organe d'affichage 15 correspond à l'aiguille des heures. Selon un mode de réalisation alternatif, on pourrait toutefois envisager un affichage analogique effectué à l'aide d'un curseur se déplaçant le long d'une échelle rectiligne comprenant différents segments d'affichage juxtaposés de sensibilité différente, ou encore un mobile d'affichage, comme par exemple un disque, pourvu d'indications de vitesse sur sa périphérie, et qui seraient lues en regard d'un repère fixe. L'avantage du mode de réalisation préférentiel décrit ci-dessus est qu'il permet de réutiliser avantageusement des éléments d'affichage classiques pour une intégration aisée dans une montre, de préférence une montre bracelet.

Un autre avantage du mode de réalisation préférentiel illustré à la figure 1 est qu'il permet d'afficher simultanément au moins deux informations de vitesse distinctes à l'aide des deux organes d'affichage analogiques, en l'occurrence l'aiguille des minutes 14 et l'aiguille des heures 15 en regard d'une échelle commune, à savoir l'un des trois segments d'affichage S1,S2, ou S3. De préférence l'aiguille des minutes 14 peut être utilisée pour afficher une vitesse instantanée (Vᵢₙₛₜ), dont la lecture sera rendue très précise grâce à la proximité de l'extrémité de l'aiguille en regard des segments d'affichage, tandis que l'aiguille des heures pourra être utilisée pour afficher une vitesse maximale (Vₘₐₓ) sur une série de mesure, pour laquelle la lecture sera certes un peu moins facilement lisible, mais permettra d'indiquer très intuitivement à l'utilisateur du tachymètre sa vitesse relative par rapport à cette vitesse maximale sur une série de mesures, c'est-à-dire d'avoir immédiatement un aperçu de l'écart entre sa vitesse instantanée et la vitesse maximale qu'il a déjà atteinte grâce à la lecture croisée de ces deux informations. Plus généralement, on peut envisager l'affichage de n'importe quelle information additionnelle de vitesse, ayant de préférence une synergie avec celle de la vitesse instantanée, comme par exemple une vitesse moyenne V_{moy}, ou la dernière vitesse mesurée V_{d} (par exemple pour permettre à un utilisateur de comparer des vitesses sur des mêmes portions de parcours) à l'aide d'un deuxième organe d'affichage, de préférence analogique comme l'aiguille des heures 15 lorsque le premier organe d'affichage 14 est l'aiguille des minutes pour accentuer les synergies et le caractère intuitif de la lecture. La figure 3 ci-après illustre un mode de réalisation préférentiel selon lequel il est même possible à l'utilisateur de déterminer la 2^{e} valeur affichée parmi un des types de valeurs énoncés ci-dessus.

Selon un mode de réalisation préférentiel de l'invention, le tachymètre électronique comporte des moyens moteurs pour actionner l'aiguille des minutes 14 et l'aiguille des heures 15, de telle sorte que ces dernières affichent respectivement une première valeur V1, comme par exemple la vitesse instantanée (Vᵢₙₛₜ) mesurée, et une deuxième valeur V2, comme par exemple la vitesse maximale (V_{Max}), en regard des segments d'affichage 11,12,13. Ces segments sont de préférence situés sur la lunette 16 d'une montre, mais pourraient également, selon une variante, être situés par exemple en périphérie du cadran 17, de telle sorte que de l'espace sur la lunette 16 soit libéré pour d'autres types d'affichage ou encore d'autres fonctions, comme par exemple l'intégration d'une interface de commande tactile pour des changements de mode d'utilisation de la montre.

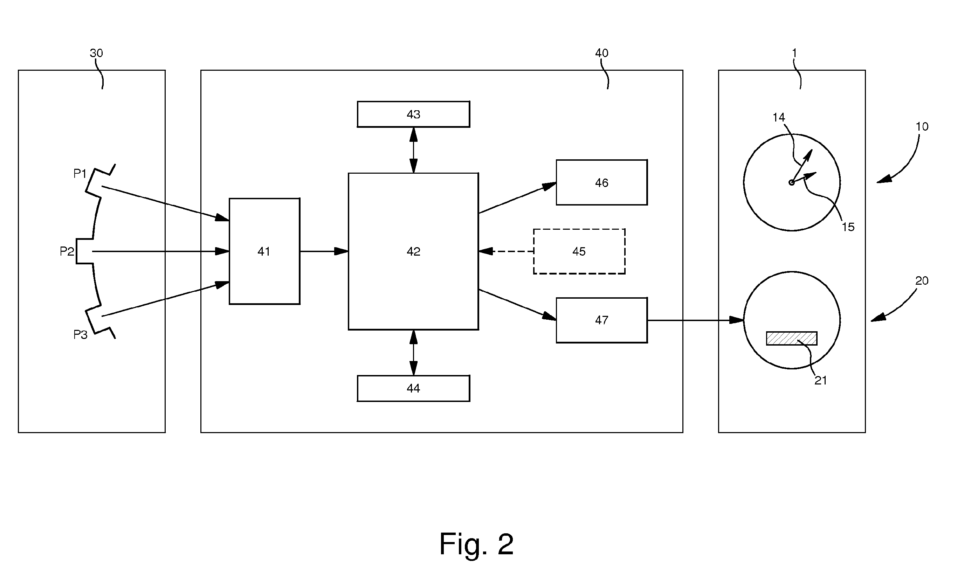

La figure 2 illustre un schéma fonctionnel d'un tachymètre électronique selon l'invention, qui comporte une interface de commande 30 formé par trois poussoirs P1,P2,P3 ainsi qu'un circuit électronique 40 en plus du dispositif d'affichage 1 formé par un premier module d'affichage analogique 10 et un deuxième module d'affichage numérique 20.

Le circuit électronique 40 comprend de préférence un module capteur 41 (auquel un module compteur est éventuellement asservi) pour détecter et comptabiliser les pressions effectuées sur les différents poussoirs, ainsi qu'un circuit contrôleur 42, comprenant par exemple un microcontrôleur, connecté d'une part à un circuit de division du temps relié à un résonateur pour fournir une base de temps 45, et d'autre part à un premier circuit de commande 46 des moteurs pour les organes d'affichage analogiques et un deuxième circuit de commande 47 de l'écran LCD 21 pour le module d'affichage numérique 20. Le circuit contrôleur 42 est également connecté à une première zone de mémoire 43 lui permettant d'effectuer les calculs relatifs au mode tachymètre et une deuxième zone mémoire 44, prévue pour stocker notamment des mesures de vitesse et de temps.

Des informations temporelles sont produites par le circuit contrôleur 42 de préférence pour assurer les fonctions du mode horaire et les fonctionnalités relatives au mode du tachymètre.

Le circuit contrôleur 42 reçoit des signaux du module capteur 41 pour la navigation et le réglage dans différents menus. La navigation d'un menu à l'autre s'effectue par exemple à l'aide de pressions successives sur le poussoir central P2. Une fois le menu tachymètre choisi, qui s'affiche par une indication sur l'écran LCD 21, une pression longue sur le premier poussoir P1, permet de faire clignoter l'affichage digital d'une longueur de référence fixée par exemple à 100 mètres sur l'écran LCD 21. Des pressions respectivement sur le premier poussoir P1 ou le troisième poussoir P2 permettent d'ajuster cette valeur de référence entre 1 et 99999 mètres, et une pression sur le poussoir central P2 permet de confirmer le réglage. Afin de faciliter le réglage de la longueur de référence, le circuit contrôleur 42 pourra être de préférence agencé de telle sorte que le réglage s'effectue séquentiellement chiffre par chiffre, en commençant par les chiffres correspondant aux puissances de dix les plus élevées, avec validation de chaque chiffre par une pression sur le poussoir central P2, plutôt que par des pressions longues sur les premiers et troisièmes poussoirs P1 & P3. Ce mode de réglage séquentiel est particulièrement avantageux pour lorsque la distance de référence D est très grande.

La longueur de référence D utilisée pour les mesures de vitesse est ensuite de préférence stockée dans la première zone de mémoire 43, de préférence non volatile et reprogrammable (type flash ou SSD) et sert de base pour le calcul d'une vitesse instantanée (Vᵢₙₛₜ), mesurée entre deux pressions successives sur le premier poussoir P1, dont la valeur est ensuite stockée dans la deuxième zone de mémoire 44 pour un affichage ultérieur éventuel.

De préférence, une série de mesure de vitesses instantanées peut comporter jusqu'à 20 mesures, qui peuvent être consultées via un affichage digital sur l'écran LCD 21 après une première pression sur le 3^{e} poussoir P3 et des pressions ultérieures pour consulter successivement toutes les valeurs mémorisées. Une pression longue sur P3 permet une remise à zéro complète et l'effacement des données stockées dans la deuxième zone de mémoire 44.

Après chaque mesure, démarrée par une pression sur le premier poussoir P1 et stoppée par une deuxième pression sur le même poussoir P1, le circuit contrôleur 42 envoie des signaux d'activation au circuit de commande des moteurs 46 pour positionner l'aiguille des minutes 14 depuis sa position de repos à 4 heures sur le cadran 17, visible sur la figure 1, en regard de la valeur qu'il a calculée. Lors de la première mesure, l'aiguille des heures 15 est également positionnée par le circuit de commande des moteurs 46, sur la même valeur que l'aiguille des minutes 14, mais elle reste immobile jusqu'à la mesure suivante. Lorsque l'aiguille des heures est utilisée pour afficher une vitesse maximale, elle ne reste par conséquent superposée à l'aiguille des minutes 14 que si cette dernière atteint une valeur supérieure à toutes celles des mesures précédentes. Les aiguilles des heures 15 et des minutes 14 sont indépendantes et servent, selon un mode de réalisation préférentiel, également à afficher l'heure et les minutes d'autres fuseaux horaires. Elles sont de préférence en aluminium afin de rester légères pour correspondre aux spécifications des moteurs.

La figure 3 montre un schéma synoptique des différentes étapes du procédé de commande et d'affichage selon un mode de réalisation préférentiel de l'invention, avec les différents paramètres de calculs, et leurs zones de mémoire associées sur la droite de la figure, ainsi que les différents modules d'affichage utilisés pour chacune de ces étapes sur la gauche de la figure. L'axe des temps s'écoule du haut vers le bas de la figure.

La première étape E1 consiste en le réglage de la distance de référence D, dont la valeur est stockée dans la première zone de mémoire 43. Comme indiqué précédemment, cette étape de réglage s'effectue de préférence de manière séquentielle, chiffre par chiffre, à l'aide des poussoirs P1 et P3 pour l'ajustement des valeurs et à l'aide du poussoir P2 pour la confirmation de chaque chiffre sur l'écran LCD 21 du module d'affichage numérique 20. Une fois cette première étape de réglage effectuée, peut s'ensuivre la séquence d'étapes SE, consistant en une deuxième étape E2 de mesure d'un intervalle de temps T, puis une troisième étape E3 de calcul d'une première valeur V1 de vitesse instantanée Vᵢₙₛₜ, par division de la distance de référence D par l'intervalle de temps T, et enfin une quatrième étape E4 d'affichage de cette vitesse instantanée Vᵢₙₛₜ. Selon le mode de réalisation préférentiel décrit, la vitesse instantanée Vᵢₙₛₜ est affichée à l'aide de l'aiguille des minutes (constituant le premier organe d'affichage analogique 14) de telle sorte que l'utilisateur puisse percevoir son mouvement avant de lire la valeur de vitesse en regard d'un des trois segments S1,S2,S3 d'affichage. Lors d'une cinquième étape E5 est calculée une deuxième valeur V2, qui correspond de préférence à une deuxième valeur de vitesse comme une vitesse maximale V_{Max}, une vitesse moyenne V_{Moy} sur une série de mesures SM, ou la dernière vitesse mesurée V_{D}. Dans ce cas la deuxième valeur V2 est ainsi obtenue après consultation préalable des données stockées dans la deuxième zone de mémoire 44. La deuxième valeur de vitesse est ensuite affichée lors d'une sixième étape E6, à l'aide de l'aiguille des heures, constituant le deuxième organe d'affichage analogique 15, afin de permettre à l'utilisateur de percevoir également le mouvement de l'aiguille lors de l'affichage, et de pouvoir aisément comparer les deux valeurs de vitesse affichées en regard des segments d'affichage commun. L'affichage des deux valeurs V1 et V2 est effectué de préférence simultanément pour permettre à l'utilisateur une comparaison immédiate et intuitive des valeurs affichées. Parallèlement à ces valeurs affichées à l'aide du premier module d'affichage analogique 10, on pourra afficher d'autres paramètres par l'intermédiaire du deuxième module d'affichage numérique, comme par exemple le temps de parcours T, ou encore le rang de la mesure en cours dans la série de mesure SM, également de préférence simultanément à l'affichage analogique des valeurs de vitesse afin de donner un aperçu le plus complet possible d'un maximum de paramètres d'affichage en un seul coup d'oeil pour l'utilisateur du tachymètre.

Comme on peut le constater sur le haut de la figure 3, l'utilisateur peut, selon un mode de réalisation préférentiel, déterminer le type de la deuxième valeur V2 affichée lors d'une étape de réglage additionnelle E7 suivant la première étape de réglage E1 de la distance de référence D, par exemple parmi une vitesse maximale V_{Max}, une vitesse moyenne V_{Moy} sur une série de mesures SM, ou la dernière vitesse mesurée V_{D}. Le choix du type de valeur pour V2 est sauvegardé dans la première zone de mémoire 43 afin de permettre au circuit contrôleur 42 de déterminer les calculs à effectuer en conséquence. Le nombre maximal de mesures sauvegardées par série de mesure SM peut quant à lui être de préférence préprogrammé et limité à 20 pour chaque valeur V1 et V2. Ces valeurs V1 et V2 de chaque série de mesure sont stockées dans la deuxième zone de mémoire 44 qui peut être de préférence systématiquement réinitialisée lors d'une huitième étape E8 suivant immédiatement la validation du réglage d'une nouvelle distance de référence D, afin d'éviter à l'utilisateur toute confusion lors de la lecture de la deuxième valeur V2, dont le croisement et la comparaison par rapport aux premières valeurs V1 de vitesse instantanée n'est pertinente que pour la série de mesure SM en cours.

L'intérêt du tachymètre selon le mode de réalisation préférentiel décrit est qu'il est adaptatif, car il est possible à l'utilisateur de déterminer librement la distance de référence pour les mesures, par exemple en fonction du parcours sur lequel se trouve l'utilisateur, ce qui en améliore la flexibilité d'usage. L'affichage analogique des valeurs calculées permet par ailleurs une lecture plus intuitive, et ce d'autant plus pour la comparaison de différentes valeurs de vitesse affichées simultanément.

## Revendications

1. Procédé de commande et d'affichage pour tachymètre électronique comprenant un premier module d'affichage (10) utilisant des organes d'affichages analogiques, une interface de commande (30) et un circuit électronique (40) pour l'activation desdits moyens d'affichage analogiques, ledit procédé comprenant une première étape (E1) de réglage d'une distance de référence (D), suivie d'une séquence (SE) de:
- une deuxième étape (E2) de mesure d'un intervalle de temps (T),
- une troisième étape (E3) de calcul d'une première valeur (V1), ladite première valeur (V1) étant une valeur de vitesse instantanée (Vᵢₙₛₜ),
- une quatrième étape (E4) d'affichage de ladite première valeur;
ledit procédé étant **caractérisé en ce que** ladite quatrième étape (E4) d'affichage est effectuée par un premier organe d'affichage analogique (14), et qu'il contient une cinquième étape (E5) de calcul d'une deuxième valeur (V2) et une sixième étape (E6) d'affichage de ladite deuxième valeur (V2) à l'aide d'un deuxième organe d'affichage analogique (15).

2. Procédé de commande et d'affichage pour tachymètre électronique selon la revendication 1, ladite interface de commande (30) comprenant une pluralité de poussoirs (P1,P2,P3), ladite première étape de réglage d'une distance de référence (D) étant **caractérisée en ce que** ladite distance de référence (D) est affichée à l'aide d'un deuxième module d'affichage numérique (20), ladite distance (D) étant comprise entre 1 et 99999 mètres et ledit réglage s'effectuant séquentiellement chiffre par chiffre à l'aide de deux (P1,P2) desdits poussoirs, chaque chiffre étant validé par un troisième (P3) desdits poussoirs.

3. Procédé de commande et d'affichage pour tachymètre électronique selon l'une des revendications précédentes, **caractérisé en ce que** ladite deuxième valeur (V2) correspond à une vitesse maximale (V_{Max}) pour une série de mesures (SM).

4. Procédé de commande et d'affichage pour tachymètre électronique selon l'une des revendications précédentes, **caractérisé en ce que** ladite deuxième valeur (V2) correspond à une vitesse maximale (V_{Max}), une vitesse moyenne (V_{Moy}), ou la dernière vitesse mesurée (V_{D}) pour une série de mesures (SM), ladite deuxième valeur (V2) étant déterminée lors d'une étape de réglage additionnelle (E7).

5. Procédé de commande et d'affichage pour tachymètre électronique selon l'une des revendications précédentes, **caractérisé en ce que** lesdites premières et deuxièmes valeurs (V1,V2) sont affichées simultanément.

6. Procédé de commande et d'affichage pour tachymètre électronique selon l'une des revendications précédentes, **caractérisé en ce que** ledit premier organe d'affichage (14) correspond à une aiguille des minutes et ledit deuxième organe d'affichage (15) correspond à une aiguille des heures d'une pièce d'horlogerie.

7. Procédé de commande et d'affichage pour tachymètre électronique selon l'une des revendications précédentes, **caractérisé en ce que** lesdites première et deuxième valeur (V1,V2) sont affichées en regard de segments d'affichage (1,2,3) juxtaposés communs.

8. Procédé de commande et d'affichage pour tachymètre électronique selon la revendication 7, **caractérisé en ce que** lesdits segments d'affichage (1,2,3) sont agencés sur une lunette (16) ou la périphérie d'un cadran (17) et déterminent des secteurs angulaires (S1,S2,S3) contigus s'étendant sur une plage angulaire d'au maximum 240 degrés au total, alors qu'un deuxième module d'affichage (20) comprenant des moyens d'affichage numériques (21) disposés sur ledit cadran (17) hors desdits secteurs angulaires (S1,S2,S3) est utilisé pour des opérations de réglage et/ou d'affichage d'une desdites valeurs (V1,V2).

9. Procédé de commande et d'affichage pour tachymètre électronique selon la revendication 7 ou 8, comprenant respectivement des première, deuxième et troisième séries (110,120,130) de repères équidistants répartis sur chacun desdits segments d'affichage (11,12,13), chacun desdits repères déterminant une sensibilité linéaire variable.

10. Procédé de commande et d'affichage pour tachymètre électronique selon la revendication 9, lorsqu'elle dépend de la revendication 8, **caractérisé en ce qu'**au moins certains desdites premiers, deuxièmes et/ou troisièmes séries (110,120,130) de repères sont superposés à une quatrième série de repères (140) correspondant aux graduations des minutes de l'heure courante.

11. Procédé de commande et d'affichage pour tachymètre électronique selon l'une des revendications précédentes, **caractérisé en ce qu'**elle comprend une huitième étape de réinitialisation d'une zone de mémoire (44) comprenant desdites premières et deuxièmes valeurs (V1,V2) d'une série de mesure (SM) après chaque dite première étape de réglage (E1) de ladite distance de référence (D).

12. Tachymètre électronique pour la mise en oeuvre de l'une des revendications 1 à 11, comprenant un premier module d'affichage (10) utilisant des moyens d'affichages analogiques, une interface de commande (30) et un circuit électronique (40) pour l'activation desdits moyens d'affichage analogiques, **caractérisé en ce que** lesdits moyens d'affichage analogiques comprennent un premier organe d'affichage analogique (14) agencé pour afficher une première valeur (V1) de vitesse instantanée (Vᵢₙₛₜ) et un deuxième organe d'affichage analogique (15) agencé pour afficher une deuxième valeur (V2).

13. Tachymètre électronique selon la revendication 12, **caractérisé en ce qu'**il comprend par ailleurs un deuxième module d'affichage (20) numérique disjoint dudit premier module d'affichage (10).

14. Tachymètre électronique selon l'une des revendications 12 ou 13, **caractérisé en ce qu'**il est intégré à une montre-bracelet, ledit premier organe d'affichage analogique (14) correspondant à l'aiguille des minutes de ladite montre-bracelet et ledit deuxième organe d'affichage analogique correspondant à l'aguille des heures de ladite montre bracelet (15).
